# EUROPEAN PATENT APPLICATION

(11) **EP 2 819 455 A1**
(43) Date of publication of application: **31.12.2014**
(21) Application number: 13290152.1
(22) Date of filing: 28.06.2013
(51) Int. Cl.: H04W 28/02

(54) **Off-path notification of RAN congestion information in an EPS network**

(71) Applicant: ALCATEL LUCENT, 92100 Boulogne-Billancourt (FR)
(72) Inventor: Thiebaut, Laurent, 91620 Nozay (FR); Casati, Alessio, Swindon, WI SN5 7DJ (GB)
(74) Representative: El Manouni, Josiane

(57) **Abstract**

Embodiments of the present invention include a method for off-path notification of Radio Access Network RAN congestion information in an Evolved Packet System EPS network, wherein:
- said RAN congestion information notified off-path by a RAN Congestion Awareness Function RCAF includes information indicating congestion status of a RAN area, and information indicating a list of User Equipments UEs impacted by said congestion status, said information indicating a list of User Equipments UEs impacted by said congestion status being determined based on information indicating relationship between User Equipment UE and RAN area,
- for a LTE-based RAN , said information indicating relationship between UE and RAN area is learnt via an S11 proxy within the RAN Congestion Awareness Function RCAF via which a Mobility Management Entity MME contacts a Serving Gateway SGW for the sending of S11 signalling,
- for a 3G-based RAN, said information indicating relationship between UE and RAN area is learnt via an Iu proxy within the RAN Congestion Awareness Function RCAF via which a Serving GPRS Support Node SGSN is contacted by a Radio Network Controller RNC for the sending of Iu signalling.

## Description

The present invention generally relates to mobile networks and systems.

Detailed descriptions of mobile networks and systems can be found in the literature, such as in particular in Technical Specifications published by standardization bodies such as for example 3GPP (3^{rd} Generation Partnership Project).

A typical example of such system is Evolved Packet System EPS, specified in particular in 3GPP TS 23.401. An EPS network generally comprises a Core Network (CN) called Evolved Packet Core called EPC that can be accessed by a Radio Access Network (RAN) including LTF-based RAN (E-UTRAN), or 3G-based RAN. An EPS network provides connectivity (referred to as Packet Data Network PDN connectivity, or IP connectivity) to User Equipments (UE).

In such systems, the demand for RAN resources may exceed the available RAN capacity to deliver the user data for a period of time, which may result in degraded end-user experience. System enhancements for RAN user plane congestion management are therefore needed, as described in particular in 3GPP TR 23.705.

As described in particular in 3GPP TR 23.705, RAN User Plane congestion management includes RAN User Plane congestion awareness (whereby network elements outside the RAN, such as Policy and Charging Rules Function (PCRF), become aware of the RAN congestion status) and RAN User Plane congestion mitigation (whereby mitigation measures are then taken to overcome the negative impact on the perceived service quality).

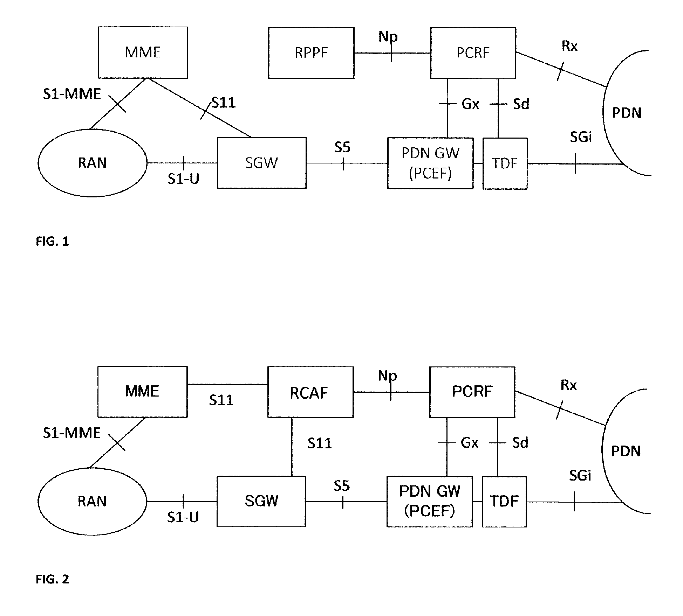

As described in particular in 3GPP TR 23.705, currently proposed solutions for RAN user plane congestion awareness include on-path based solutions and an off-path based solution relying on a RAN congestion awareness function RCAF (called RPPF - RAN Payload Perceive Function - in 23.705 v0.5.0) contacting directly the PCRF. In the RPPF / RCAF -based solution, a new logical function entity, the RCAF RAN congestion awareness function (or RPPF - RAN Payload Perceive Function -), collects RAN user plane congestion information and further reports to PCRF for the purpose of congestion mitigation over a new reference point Np introduced between RCAF and PCRF. An architecture for RPPF -based solution as currently proposed is recalled in figure 1, taken from 3GPP TR 23.705.

While the RPPF -based solution has certain advantages over the on-path based solution (in particular in terms of signalling overhead), there is a still a need to improve RPPF- based user plane congestion awareness, as recognized by the inventors and as will be described with more detail later. In particular, there is a need for a solution enabling to enhance RAN User Plane Congestion Information (RUCI) reported by RPPF / RCAF with a list of UEs impacted by a congestion status, while preserving the advantages of the RCAF -based solution (in particular in terms of signalling overhead). In particular, there is a need for such solution, for an EPS network. More generally, there is a need to improve RAN User Plane congestion management in such networks and systems.

Embodiments of the present invention in particular address such needs.

These and other objects are achieved, in one aspect, by a method for off-path notification of Radio Access Network RAN congestion information in an Evolved Packet System EPS network, wherein:
- said RAN congestion information notified off-path by a RAN Congestion Awareness Function RCAF includes information indicating congestion status of a RAN area, and information indicating a list of UEs impacted by said congestion status, said information indicating a list of UEs impacted by said congestion status being determined based on information indicating relationship between User Equipment UE and RAN area,
- for an LTE-based RAN , said information indicating relationship between UE and RAN area is learnt via an S11 proxy within the RAN Congestion Awareness Function RCAF via which a Mobility Management Entity MME contacts a Serving Gateway SGW for the sending of S11 signalling,
- for a 3G-based RAN, said information indicating relationship between UE and RAN area is learnt via an Iu proxy within the RAN Congestion Awareness Function RCAF via which a Serving GPRS Support Node SGSN is contacted by a Radio Network Controller RNC for the sending of Iu signalling.

These and other objects are achieved, in other aspects, by various entities configured to carry out such method and/or other aspects of the present invention, said entities including, in particular (though not exclusively): EPS network entities such as RAN Congestion Awareness Function RCAF, and Mobility Management Entity MME.

Some embodiments of apparatus and/or methods in accordance with embodiments of the present invention are now described, by way of examples only, and with reference to the accompanying drawings, in which:
- Figure 1 is intended to recall a currently proposed architecture for RPPF - based RAN user plane congestion management,
- Figure 2 is intended to illustrate an architecture for RCAF -based RAN user plane congestion management, according to embodiments of the present invention (by way of example for LTE-based RAN).

Various embodiments and/or aspects of the present invention will be more detailed in the following, by way of example for an EPS network. However it should be understood that embodiments of the present invention are not limited to this example and could apply in particular to other mobile networks.

3GPP, as part of the UPCON Work Item (User Plane Congestion), is studying solutions to report RAN user plane congestion status to the Core Network. This is documented in 3GPP TR 23.705. The RAN user plane congestion status should contain
- The Congestion level (or the absence of congestion)
- The Congestion/Abatement location information (e.g. Cell ID);
- The list of UE impacted by the congestion status (change)

Based on this information, the Core Network can take appropriate actions aiming at mitigating the congestion, e.g. signaling to Push applications that they should defer the download of bulky information to the UE that are located in a congested area, or modifying the policies associated with an UE located in a congested area

Embodiments of the present invention are related to how the RAN user plane congestion status information (RUCI) is reported to the Core.

There are currently 2 families of solutions for RUCI reporting to the Core that are documented
- (2 possible) On-path solutions where the RUCI notification to the PCRF is using:
   ○ Solution-U: mostly the User plane path, i.e.
      ■ The Congestion level (or the absence of congestion) and the Congestion/Abatement location information (e.g. Cell ID) are sent from the RAN (ENB) to the PGW in GTP-u (user plane protocol carrying UPlink traffic of an UE) and
      ■ Then the PGW determines the involved UE and sends the RUCI over Diameter Gx to the PCRF.
   ○ Solution-C: the Control plane path, i.e.,
      ■ The Congestion level (or the absence of congestion) and the Congestion/Abatement location information (e.g. Cell ID) from RAN (ENB) to the MME over S1AP signaling, and then
      ■ The MME determines the list of impacted UE
      ■ The RUCI is sent from MME to PGW over GTP-c (via SGW) and then over Diameter Gx from PGW to PCRF
- An Off-path solution where
   ○ A new RCAF (RAN congestion awareness function) functional entity is added to the architecture,
   ○ The RCAF Collects and processes RAN's cell congestion information from OAM;
   ○ The RCAF Communicates RUCI to the PCRFs serving the local PLMN over a new Np reference point
      The Off-part solution is documented in section 6.7 of 3GPP TR 23.705 v0.5.0 where the RACF is called RPPF.

The Off-path solution has the merit of requiring less signaling than the On-path solution. The On-path solutions both require (when the congestion status of a cell has changed) at least (*) as many Gx messages as the number of UE (in Active state) served by this cell.
(*) When one of that UE would have p PDN connections set-up, this UE would induce p Gx messages to report the change of congestion status for this UE

NOTE: It is theoretically possible to modify Gx in order for the PGW to report the change of congestion status for multiple UE in one Gx message. This would nevertheless radically change the nature of the Gx interface and would require a big change for both PGW and PCRF.

One key requirement is that the RUCI sent to the PCRF is to contain list of UE impacted by the congestion status (change).

Despite the advantage of requiring less signaling load, the Off-path solution has the issue that it currently does not enable the RPPF to report a list of UEs impacted by a congestion status (change). Embodiments of the present invention in particular enable to solve this issue.

Embodiments of the present invention provide that, to get the relationship between cells and UE for LTE-based RAN, the RCAF relies on an internal S11 proxy.

The RCAF may leverage following information to build the RUCI (RAN User Plane Congestion Information):
- Notifications of cell congestion status together with information on the cell topology (e.g. which cells are served by which ENB). The exact nature of this information and the way used by the RCAF to get this information is out of the scope of the 3GPP (the source of the information may be assumed to be the RAN OAM).
- Relationship between cells and UE. According to embodiments of the present invention, for LTE, this may rely on an internal S11 proxy within the RCAF .

For LTE-based RAN, embodiments of the present invention provide that, in order to determine which UE are served by a given ENB, the RCAF contains an S11 proxy (i.e. as illustrated by way of example in figure 2, the MME contacts the SGW via the RCAF). The RCAF may leverage following S11 messages (defined in 3GPP TS 29.274 specifying signalling protocol over S11 interface between Mobility Management MME and Serving Gateway SGW):
- Create Session Request, that contains the User Location Information ULI (As specified by 3GPP, this IE shall be included on the S11 interface for E-UTRAN Initial Attach and UE-requested PDN Connectivity procedures. It shall include ECGI&TAI). According to embodiments of the present invention, this message is used by the RCAF to create an association between an UE and a Cell-Id (hence ENB)
- Modify Access Bearers Request (e.g. issued by the MME at ENB mobility or at UE triggered Service Request). According to embodiments (and also another aspect) of the present invention, the Modify Access Bearers Request message is modified to carry the ECGI&TAI of the target cell. According to embodiments of the present invention, this message is used by the RCAF to change an association between an UE and a Cell-Id (hence ENB)
- Release Access Bearers Request (sent e.g. as part of S1 release, of IU/RAN release, ..) to determine that an UE is no more associated with an ENB. According to embodiments of the present invention, this message is used by the RCAF to remove an association between an UE and a Cell-Id (hence ENB)
- Delete Session Request (sent e.g. as part of the Detach procedure) to determine that an UE is no more associated with an ENB (when the last PDN connection of an UE has been deleted). According to embodiments of the present invention, this message is used by the RCAF to remove an association between an UE and a Cell-Id (hence ENB)

NOTE: In order not to overflow the MME by new messages that would indicate intra ENB (inter cell/sectors) mobility, the granularity of the UE location information known by the RCAF may only be the ENB. This should not be an issue as:
■ The user plane congestion status should take into the congestion of the last mile backhaul link
■ This last mile backhaul link is shared between the various cells served by the same ENB

Embodiments of the present invention provide that, based on the information learned via its S11 proxy the RCAF can determine which UEs are impacted by the congestion status of a cell and provide the PCRF with cell congestion status notifications that include the list of impacted UEs.

In order for the MME to contact the SGW via RCAF , the MME behavior and the S11 interface may be modified as follows:
- Once the MME has determined the SGW that is to serve / that is serving the UE, the MME adds a new IE in the S11 message that contains the Identity of the target SGW
- The MME sends the S11 message to SGW via the the RCAF . The RCAF extracts the information it needs, removes the IE that contains the Identity of the target SGW and sends the message to the SGW

NOTE: It may be assumed that there is a single logical RCAF serving a MME Group

NOTE: Such process may apply to any message the MME sends over S11. As an optimization, the MME may decide to send only following messages via the RCAF : Create Session Request, Modify Access Bearer, Release Access Bearers Request, Delete Session Request.

The SGW sends S11 signaling directly to the MME.

For 3G-based RAN, embodiments of the present invention provide that, in order to determine which UE are served by a given 3G cell, the RCAF contains an Iu proxy (i.e. an RNC contacts a SGSN via the RACF). The RCAF may leverage following Iu messages (defined in 3GPP TS 25.413 specifying signalling protocol over Iu interface between Radio Network Controller RNC and Serving GPRS Support Node SGSN)):
- "INITIAL UE" message, including the SAI (Service Area Identifier as defined in 3GPP TS 25.401) and RAI, used by the RCAF to create an association between an Iu signalling connection and a SAI identifying a cell,
- "COMMON ID" message, including the IMSI (International Mobile Subscriber Identity as defined in 3GPP TS 23.003), used by the RCAF to create an association between an Iu signalling connection and an UE (IMSI), and thus based on the INITIAL UE message received previously to create an association between an UE (IMSI) and a SAI identifying a cell,
- "RELOCATION REQUEST" message, including the IMSI, used by the RCAF to create an association between an Iu signalling connection and an UE (IMSI),
- "LOCATION REPORT" message, including the SAI, to modify the association between an UE and a SAI identifying a cell
- "IU RELEASE COMMAND" message, used by the RCAF to remove the associations between an Iu signaling connection, UE and a SAI identifying a cell As opposed to the case of MME and S11 proxy, there is no need to modify the RNC for the purpose of the mechanism described in this document
   - Iu signalling does not need to be modified (whereas slight S11 modifications are required)
   - the RNC can address the RCAF based on local addressing configuration that provides the address of the RCAF instead of the address of the SGSN. Then the RCAF is configured to forward the corresponding signalling to the SGSN

Other embodiments and/or aspects of the present invention provide that, to build the RUCI, the RCAF may apply local policies such as
- Providing a "temporal integration" to only communicate to the PCRF RAN congestion status corresponding to sustained level of congestion (or congestion abatement)
- Providing a "spatial integration": the RUCI about a cell takes into account the congestion status reported by the RAN about the neighbouring cells

In one aspect, there is provided a method for off-path notification of Radio Access Network RAN congestion information in an Evolved Packet System EPS network.

Various embodiments are provided, which may be used alone or in combination, according to various combinations.

In an embodiment,
○ said RAN congestion information notified off-path by a RAN Congestion Awareness Function RCAF includes information indicating congestion status of a RAN area, and information indicating a list of User Equipments UEs impacted by said congestion status, said information indicating a list of User Equipments UEs impacted by said congestion status being determined based on information indicating relationship between User Equipment UE and RAN area,
○ for an LTE-based RAN , said information indicating relationship between UE and RAN area is learnt via an S11 proxy within the RAN Congestion Awareness Function RCAF via which a Mobility Management Entity MME contacts a Serving Gateway SGW for the sending of S11 signalling,
○ for a 3G-based RAN, said information indicating relationship between UE and RAN area is learnt via an Iu proxy within the RAN Congestion Awareness Function RCAF via which a Serving GPRS Support Node SGSN is contacted by a Radio Network Controller RNC for the sending of Iu signalling.

In an embodiment, said method comprises:
- an MME having determined a SGW that is to serve or that is serving an UE, adding identity information indicating the identity of said SGW to an S11 signalling message.

In an embodiment, said method comprises:
- an RCAF extracting from an S11 signalling message information indicating relationship between UE and RAN area.

In an embodiment, said method comprises:
- an RCAF removing identity information indicating the identity of a target SGW from an S11 signalling message before sending said message to said target SGW.

In an embodiment, information indicating relationship between UE and RAN area carried by an S11 signalling message includes information identifying an UE, and UE location information.

In an embodiment, the granularity of the UE location information carried by an S11 signalling message is a cell, and the granularity of the UE location information learnt by the RCAF is an area served by an ENodeB.

In an embodiment, said information indicating congestion status of a RAN area includes information indicating cell congestion status together with information indicating cell topology, e.g. which cells are served by which ENodeB.

In an embodiment, S11 signalling sent via RCAF include at least one of following S11 messages:
- Create Session Request, including ECGI&TAI,
- Modify Access Bearers Request, including ECGI&TAI,
- Release Access Bearers Request,
- Delete Session Request.

In an embodiment, said method comprises:
- an MME sending a "Modify Access Bearers Request" S11 message, including User Location Information ULI, including ECGI&TAI.

In an embodiment, said method comprises:
- The RCAF using at least one of following S11 message to create or change or remove an association between an UE and a Cell-Id identifying a cell, hence an ENB:
- Create Session Request, including ECGI&TAI, used by the RCAF to create an association between an UE and a Cell-Id identifying a cell, hence an ENodeB ENB,
- Modify Access Bearers Request, including ECGI&TAI, used by the RCAF to change an association between an UE and a Cell-Id identifying a cell, hence an ENB,
- Release Access Bearers Request, used by the RCAF to remove an association between an UE and a Cell-Id identifying a cell, hence an ENB,
- Delete Session Request, used by the RCAF to remove an association between an UE and a Cell-Id identifying a cell, hence an ENB.

In an embodiment, said method comprises:
- an RCAF extracting from an Iu signalling message information indicating relationship between UE and RAN area.

In an embodiment, Iu signalling sent via RCAF include at least one of following Iu messages:
- "INITIAL UE" message, including the SAI and RAI,
- "COMMON ID" message, including the IMSI,
- "RELOCATION REQUEST" message, including the IMSI,
- "LOCATION REPORT" message, including the SAI,
- "IU RELEASE COMMAND" message.

In an embodiment, said method comprises:
- The RCAF using at least one of following Iu message to create or change or remove an association between an UE and a SAI identifying a cell,:
- "INITIAL UE" message, including the SAI and RAI, used by the RCAF to create an association between an Iu signalling connection and a SAI identifying a cell,
- "COMMON ID" message, including the IMSI, used by the RCAF to create an association between an Iu signalling connection and an UE (IMSI), and thus based on the INITIAL UE message received previously to create an association between an UE (IMSI) and a SAI identifying a cell,
- "RELOCATION REQUEST" message, including the IMSI, used by the RCAF to create an association between an Iu signalling connection and an UE (IMSI),
- "LOCATION REPORT" message, including the SAI, to modify the association between an UE and a SAI identifying a cell
- "IU RELEASE COMMAND" message, used by the RCAF to remove the associations between an Iu signalling connection, UE and a SAI identifying a cell

In an embodiment, said method comprises:
- The RCAF determining said information indicating said list of UEs impacted by said congestion status.

In an embodiment, said method comprises:
- the RCAF providing a temporal integration of said notified information indicating congestion status of a RAN area, to only report RAN congestion status corresponding to sustained levels of congestion.

In an embodiment, said method comprises:
- the RCAF providing a spatial integration of notified information indicating congestion status of a cell, to take into account notified information indicating congestion status of neighboring cells.

Other embodiments are of course possible, based on the above description.

In other aspects, there are provided various entities configured to carry out such method and/or other aspects of the present invention, said entities including, in particular (though not exclusively), EPS network entities such as RAN Congestion Awareness Function RCAF, and Mobility Management Entity MME.

The detailed implementation of such entities does not raise any special problem for a person skilled in the art, and therefore does not need to be more fully disclosed, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for off-path notification of Radio Access Network RAN congestion information in an Evolved Packet System EPS network, wherein:
- said RAN congestion information notified off-path by a RAN Congestion awareness function RCAF includes information indicating congestion status of a RAN area, and information indicating a list of UEs impacted by said congestion status, said information indicating a list of UEs impacted by said congestion status being determined based on information indicating relationship between User Equipment UE and RAN area,
- for an LTE-based RAN , said information indicating relationship between UE and RAN area is learnt via an S11 proxy within the RAN Congestion Awareness Function RCAF via which a Mobility Management Entity MME contacts a Serving Gateway SGW for the sending of S11 signalling,
- for a 3G-based RAN, said information indicating relationship between UE and RAN area is learnt via an Iu proxy within the RAN Congestion Awareness Function RCAF via which a Serving GPRS Support Node SGSN is contacted by a Radio Network Controller RNC for the sending of Iu signalling.

2. A method according to claim 1, comprising:
- an MME having determined a SGW that is to serve or that is serving an UE, adding identity information indicating the identity of said SGW to an S11 signalling message.

3. A method according to claim 1 or 2, comprising:
- an RCAF extracting from an S11 signalling message information indicating relationship between UE and RAN area.

4. A method according to any of claims 1 to 3, comprising:
- an RCAF removing identity information indicating the identity of a target SGW from an S11 signalling message before sending said message to said target SGW.

5. A method according to any of claims 1 to 4, wherein information indicating relationship between UE and RAN area carried by an S11 signalling message includes information identifying an UE, and UE location information.

6. A method according to any of claims 1 to 5, wherein the granularity of the UE location information carried by an S11 signalling message is a cell, and the granularity of the UE location information learnt by the RCAF is an area served by an ENodeB.

7. A method according to any of claims 1 to 6, wherein said information indicating congestion status of a RAN area includes information indicating cell congestion status together with information indicating cell topology, e.g. which cells are served by which ENodeB.

8. A method according to any of claims 1 to 7, wherein S11 signalling sent via RCAF include at least one of following S11 messages:
- Create Session Request, including ECGI&TAI,
- Modify Access Bearers Request, including ECGI&TAI,
- Release Access Bearers Request,
- Delete Session Request.

9. A method according to any of claims 1 to 8, comprising:
- an MME sending a "Modify Access Bearers Request" S11 message, including User Location Information ULI, including ECGI&TAI.

10. A method according to any of claims 1 to 9, comprising:
- The RCAF using at least one of following S11 message to create or change or remove an association between an UE and a Cell-Id identifying a cell, hence an ENB:
- Create Session Request, including ECGI&TAI, used by the RCAF to create an association between an UE and a Cell-Id identifying a cell, hence an ENodeB ENB,
- Modify Access Bearers Request, including ECGI&TAI, used by the RCAF to change an association between an UE and a Cell-Id identifying a cell, hence an ENB,
- Release Access Bearers Request, used by the RCAF to remove an association between an UE and a Cell-Id identifying a cell, hence an ENB,
- Delete Session Request, used by the RCAF to remove an association between an UE and a Cell-Id identifying a cell, hence an ENB.

11. A method according to any of claims 1 to 10, comprising:
- an RCAF extracting from an Iu signalling message information indicating relationship between UE and RAN area.

12. A method according to any of claims 1 to 11, wherein Iu signalling sent via RCAF include at least one of following Iu messages:
- "INITIAL UE" message, including the SAI and RAI,
- "COMMON ID" message, including the IMSI,
- "RELOCATION REQUEST" message, including the IMSI,
- "LOCATION REPORT" message, including the SAI,
- "IU RELEASE COMMAND" message.

13. A method according to any of claims 1 to 12, comprising:
- The RCAF using at least one of following Iu message to create or change or remove an association between an UE and a SAI identifying a cell,:
- "INITIAL UE" message, including the SAI and RAI, used by the RCAF to create an association between an Iu signalling connection and a SAI identifying a cell,
- "COMMON ID" message, including the IMSI, used by the RCAF to create an association between an Iu signalling connection and an UE (IMSI), and thus based on the INITIAL UE message received previously to create an association between an UE (IMSI) and a SAI identifying a cell,
- "RELOCATION REQUEST" message, including the IMSI, used by the RCAF to create an association between an Iu signalling connection and an UE (IMSI),
- "LOCATION REPORT" message, including the SAI, to modify the association between an UE and a SAI identifying a cell
- "IU RELEASE COMMAND" message, used by the RCAF to remove the associations between an Iu signalling connection, UE and a SAI identifying a cell

14. A method according to any of claims 1 to 13, comprising:
- The RCAF determining said information indicating said list of UEs impacted by said congestion status.

15. A method according to any of claims 1 to 14, comprising:
- the RCAF providing a temporal integration of said notified information indicating congestion status of a RAN area, to only report RAN congestion status corresponding to sustained levels of congestion.

16. A method according to any of claims 1 to 15, comprising:
- the RCAF providing a spatial integration of notified information indicating congestion status of a cell, to take into account notified information indicating congestion status of neighboring cells.

17. An EPS network entity, such as RAN Congestion Awareness Function RCAF, or Mobility Management Entity MME, configured to carry out a method according to any of claims 1 to 16.
